# EUROPEAN PATENT APPLICATION

(11) **EP 1 170 386 A2**
(43) Date of publication of application: **09.01.2002**
(21) Application number: 01115608.0
(22) Date of filing: 02.07.2001
(51) Int. Cl.: C21C 5/52

(54) **Injection lance, particularly for injecting substances in the form of powder or particulate, into electric furnaces for steelmaking**

(30) Priority: 04.07.2000 IT MI001509
(71) Applicant: ELTI S.r.l., 24060 Sovere (Bergamo) (IT)
(72) Inventor: Macario, Federico, 24065 Lovere (prov. of Bergamo) (IT); Bianchi, Renato, 24060 Sovere (Prov. of Bergamo) (IT)
(74) Representative: Modiano, Guido, Dr.-Ing.

(57) **Abstract**

An injection lance, particularly for injecting substances in the form of powder or particulate, into electric furnaces for steelmaking, comprising a lance body (2) in which there is at least one first duct (3) which is connected to a first supply port (4) and leads outside by means of a delivery opening (5) at an axial end of the lance body (2). The first supply port (4) can be connected to a device for supplying a first substance to be injected by means of the lance. Along the first duct, between the first port and the delivery opening, there is a choke which is connected to a second supply port (7) for introducing in the first duct a propellant fluid adapted to accelerate and propel, through the delivery opening (5), the first substance mixed with the propellant fluid.

## Description

The present invention relates to an injection lance, particularly for injecting substances in the form of powder or particulate, into electric furnaces for steelmaking.

In the production of steel by means of electric furnaces, during the various steps of the operation of the furnace it is necessary to introduce various chemicals in the furnace for various purposes depending on the steps of the process.

In particular, during the melting step, in order to preheat the iron scrap introduced in the furnace and assist the action of the electrodes in melting, so-called oxyfuel burners are used which are applied to the side walls of the furnace and introduce in the furnace oxygen and fuel in order to produce a flame for heating the metal.

During the subsequent refining step, various chemical substances, such as for example carbon in the form of powder of coal or graphite, oxygen, but also hydrocarbons such as for example methane, are introduced in the furnace in order to obtain the intended formulation of the metal, eliminating unwanted substances and facilitating the formation of foamy slag above the liquid metal and also maintaining specific physical-chemical characteristics for the liquid metal and for the slag.

These substances, during the refining step, are generally injected into the furnace by using injection lances inserted through the deslagging door of the furnace by means of a robotized arm.

The use of the deslagging door of the furnace for handling such injection lances is not devoid of problems, since opening the deslagging door during the steelmaking process negatively affects the operation of the furnace.

The current trend is to inject all the substances into the furnace by means of lances which are applied to the walls of the furnace, so as to eliminate any injection through the deslagging door which, by remaining closed, has no negative effect on the operation of the furnace.

In order to meet this requirement, however, it is necessary to solve the problem of being able to reach correctly the slag or liquid metal with the substances delivered through the injection lances, since placing the lances on the furnace walls inevitably entails that the delivery end of the lance moves away from the liquid bath with respect to the conditions in which a lance inserted through the deslagging door operates.

This problem is even more severe when the substances to be injected are not gases but powders or particulates, such as for example powder of coal or graphite or lime or metals.

The aim of the present invention is to solve the above-described problem, by providing an injection lance, particularly for injecting substances in the form of powder or particulate, into electric furnaces for steelmaking, which is capable of ensuring that the injected substances receive a thrust which allows them to reach correctly the liquid metal bath or the slag even if the lance is applied to the furnace walls.

Within this aim, an object of the invention is to provide an injection lance capable of performing a plurality of functions for injecting different substances depending on the steps of the operation of the furnace.

Another object of the invention is to provide an injection lance which is structurally simple and can be manufactured at competitive costs.

This aim and these and other objects which will become better apparent hereinafter are achieved by an injection lance, particularly for injecting substances in the form of powder or particulate, into electric furnaces for steelmaking, which comprises a lance body in which there is at least one first duct connected to a first supply port and leading outside by means of a delivery opening at an axial end of the lance body, said first supply port being connectable to a device for supplying a first substance to be injected by means of the lance, characterized in that along said first duct, between said first port and said delivery opening, there is a choke which is connected to a second supply port for introducing in said first duct a propellant fluid adapted to accelerate and propel, through said delivery opening, said first substance mixed with said propellant fluid.

Further characteristics and advantages of the invention will become better apparent from the description of a preferred but not exclusive embodiment of the injection lance according to the invention, illustrated only by way of non-limitative example in the accompanying drawings, wherein:
Figure 1 is an axial sectional view of the injection lance according to the invention;
Figure 2 is an enlarged-scale view of a detail of Figure 1.

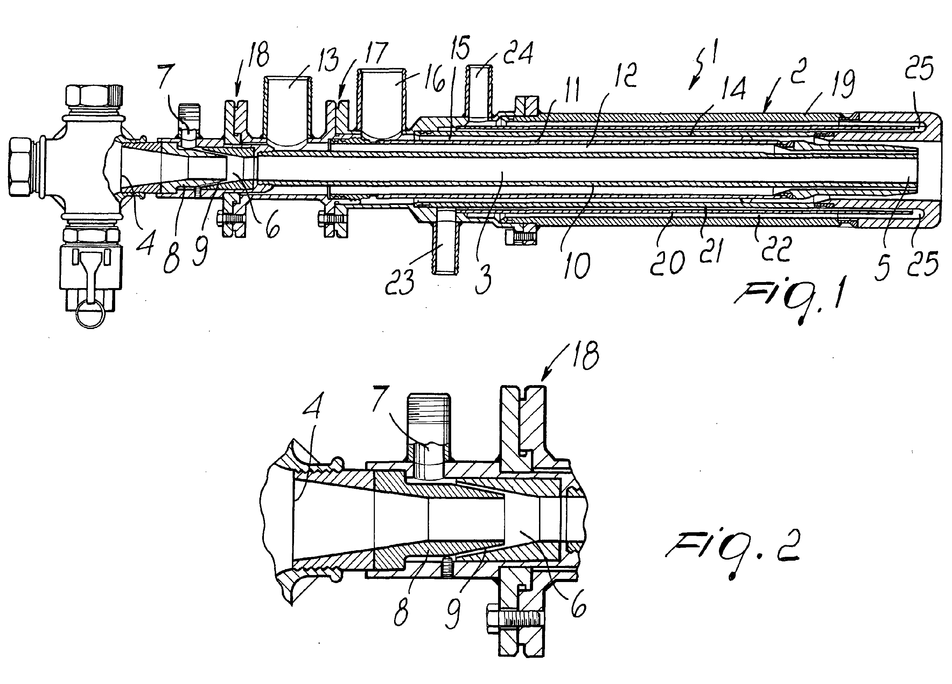

With reference to the figures, the injection lance according to the invention, generally designated by the reference numeral 1, comprises a lance body 2 in which there is at least one first duct 3 which is connected to a first supply port 4 and leads outside through a delivery opening 5 at an axial end of the lance body 2.

The first supply port 4 can be connected to a device for supplying a first substance to be injected by means of the lance, particularly a substance in the form of powder or particulate, such as for example powder of carbon or graphite, lime, or another substance.

According to the invention, along the first duct 3, between the first supply port 4 and the delivery opening 5, there is a choke 6 which is connected to a second supply port 7, through which a propellant fluid is introduced in the first duct 3; said fluid is adapted to accelerate and propel, through the delivery opening 5, the first substance mixed with the propellant fluid.

The choke 6 is frustum-shaped and gradually tapers from the supply port 4 toward the delivery opening 5.

A frustum-shaped nozzle 8 is conveniently inserted coaxially in the frustum-shaped choke 6 and also gradually tapers toward the delivery opening 5. A conical annular passage 9 is formed between the frustum-shaped nozzle 8 and the frustum-shaped choke 6 and is connected to the second port 7 for supplying the pressurized propellant fluid.

Conveniently, the first duct 3 is formed inside a first tubular duct 10 which is inserted, preferably coaxially, in a second tubular body 11.

Between the first tubular body 10 and the second tubular body 11 there is a first interspace 12 which leads outside at the delivery end of the lance and is connected to a third port 13 which can be used to introduce in the first interspace 12 another substance to be injected by means of the lance.

The second tubular body 11 is in turn inserted, preferably coaxially, in a third tubular body 14, so that a second interspace 15 is formed between the second tubular body 11 and the third tubular body 14; said second interspace also leads outside at the delivery end of the lance and is connected to a fourth supply port 16, through which it is possible to introduce in the lance a further substance to be injected by means of the lance.

The second tubular body 11 is inserted in the third tubular body 14 through its axial end that lies opposite with respect to the delivery end of the lance and is fixed thereto by means of a flanged coupling, designated by the reference numeral 17.

Also the first tubular body 10 is inserted coaxially in the second tubular body 11, starting from the axial end thereof that lies opposite with respect to the delivery end of the lance, and is fixed to the second tubular body 11 by means of a flanged coupling 18. The ports 7, 13 and 16 are formed in a lateral portion of the first tubular body 10, the second tubular body 11, and the third tubular body 14, respectively, and are meant to be connected to respective ducts for supplying the various fluid substances.

Conveniently, around the third tubular body 14 there is a tubular cladding body 19, and between the tubular cladding body 19 and the third tubular body 14 there is a cooling interspace in which a fluid, for example water, is circulated in order to appropriately cool the lance body.

More particularly, in the cooling interspace there is a substantially cylindrical partition 20, which divides the cooling interspace into two chambers, respectively an inner chamber 21, which is located adjacent to the third tubular body 14, and an outer chamber 22, which is located adjacent to the tubular cladding body 19.

The first chamber 21 is connected to an inlet port 23 for the cooling fluid, while the outer chamber 22 is connected to an outlet port 24 for the cooling fluid.

The two chambers 21 and 22 are mutually connected by means of appropriate discontinuities 25 of the partition 20 provided proximate to the delivery end of the lance.

Operation of the lance according to the invention is as follows.

By activating the device for supplying the substance in the form of powder or particulate that is connected to the first supply port 4 and by introducing a pressurized propellant fluid, for example air, through the second supply port 7, one obtains delivery with high speed and thrust of the substance in the form of powder or particulate through the delivery end of the lance.

The substance in the form of powder or particulate, introduced through the first supply port 4, undergoes a first acceleration by flowing through the frustum-shaped nozzle 8 and undergoes a further acceleration by flowing through the frustum-shaped portion 6.

In particular, the propellant fluid, by entering through the supply port 7 and flowing through the frustum-shaped portion 6, is accelerated, entraining the substance in the form of powder or particulate that has been introduced in the first duct 3. The speed increase obtained in the frustum-shaped portion 6 generates, at said frustum-shaped portion 6, a suction which draws continuously the particulate substance introduced in the first duct 3 through the first supply port 4.

For this reason, the lance according to the invention can be mounted without problems on the wall of an electric furnace, since by virtue of the intense thrust applied to the injected substance, even in the case of substances in the form of powder or particulate, it is capable of reaching, with its jet, the slag or liquid metal bath that lies below.

The supply ports 13 and 16 can be used, if required, to inject, together with the substance in the form of particulate or powder, other substances into the furnace.

In particular, during the melting step the lance according to the invention can be used as an oxyfuel burner by connecting the first supply port 4 to a duct for supplying graphite or coal powder, the supply port 13 to a duct for supplying a hydrocarbon, such as for example methane, or a fuel in general, and the supply port 16 to a duct for supplying oxygen.

In this operating condition, the lance according to the invention ejects a flame which, by virtue of the presence of the graphite or coal, reaches a high temperature and is very bright and therefore capable of transmitting large amounts of heat by radiation to the scrap being melted.

In this manner, more heat energy can be transmitted to the scrap, reducing the consumption of electric power and also reducing melting times.

During this step, by adequately increasing the supply pressure of the pressurized air introduced through the supply port 7, it is possible to generate a split in the flame which, instead of being dart-like in shape, assumes the appearance of a fireball at high speed and at an extremely high temperature. Accordingly, the heat energy that is transmitted is distributed over a larger surface of scrap, with consequent advantages for increasing the speed of the melting process.

During the refining step, the lance according to the invention can be used to inject substances into the slag or liquid metal bath.

By injecting graphite or coal into the slag it is possible to improve and control the level of oxidation of the slag, contrasting the level of oxidation of the bath and thus improving the yield of the metallic load, and also to maintain the basicity-acidity of the slag at the chosen level and thus contain the wear of the refractories that line the internal surface of the furnace.

Moreover, the possibility to inject efficiently graphite or coal into the slag allows to develop the most appropriate operating procedures in order to obtain the intended chemical analysis before tapping, contrast the ppm of oxygen, and perform efficiently all dephosphorization procedures.

Clearly, it is also possible to inject into the slag, by means of the lance according to the invention, other substances in the form of powder or particulate, such as lime, aluminum, iron, silicon, chromium, et cetera, with other purposes according to the type of steel to be produced.

The injection of substances in the liquid metal bath is particularly effective by virtue of the intense injection force ensured by the lance according to the invention. The ejected jet is capable of overcoming the resistance generated by the slag head and therefore pierce said slag to reach the liquid bath. By injecting carbon in the liquid metal bath, depending on the various steps of the steelmaking process, it is possible to obtain the following advantages:
-- injecting the intended amount of carbon during the melting steps in order to generate, following reaction with oxygen, CO which is then converted into CO₂, performing so-called reheating;
-- efficiently producing energy in the liquid bath by virtue of the combination of coal and oxygen as an exothermic chemical reaction. This possibility allows the advantage of reducing melting and refinement times and therefore allows to increase the productivity of the furnace and reduce the incidence of electric power;
-- contrasting or reducing the ppm of oxygen, if too high;
-- reducing production costs by virtue of the increased efficiency of the injection of carbon, since with the lance according to the invention a high percentage of said carbon reaches the liquid metal bath;
-- and an advantage also from the environmental standpoint, since problems in the waste gas aspiration system are avoided by effectively avoiding the dissipation of large amounts of carbon as coal or graphite powder.

In practice it has been observed that the injection lance according to the invention fully achieves the intended aim and objects, since by imparting a high speed and an intense injection force to the injected substances, particularly in the form of powder or particulate, it allows to achieve high injection effectiveness even if the lance is arranged on the wall of the furnace and is therefore spaced upward from the free surface of the liquid metal and from the slag.

The injection lance thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2000A001509, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An injection lance, particularly for injecting substances in the form of powder or particulate, into electric furnaces for steelmaking, comprising a lance body in which there is at least one first duct which is connected to a first supply port and leads outside by means of a delivery opening at an axial end of the lance body, said first supply port being connectable to a device for supplying a first substance to be injected by means of the lance, **characterized in that** along said first duct, between said first port and said delivery opening, there is a choke which is connected to a second supply port for introducing in said first duct a propellant fluid adapted to accelerate and propel, through said delivery opening, said first substance mixed with said propellant fluid.

2. The injection lance according to claim 1, **characterized in that** said choke is frustum-shaped and gradually tapers toward said delivery end of the lance.

3. The injection lance according to claims 1 and 2, **characterized in that** a frustum-shaped nozzle is inserted coaxially in said frustum-shaped choke and gradually tapers from said first supply port toward the delivery end of the lance; a conical annular passage being formed between said frustum-shaped nozzle and said frustum-shaped choke and being connected to said second port for supplying the pressurized propellant fluid.

4. The injection lance according to one or more of the preceding claims, **characterized in that** said first duct is formed inside a first tubular body which is inserted in a second tubular body; a first interspace being formed between said first tubular body and said second tubular body and leading outside at said delivery end; said first interspace being connected to a third port for introducing in said first interspace another substance to be injected by means of the lance.

5. The injection lance according to one or more of the preceding claims, **characterized in that** said second tubular body is inserted in a third tubular body; a second interspace being formed between said second tubular body and said third tubular body and leading outside at said delivery end; said second interspace being connected to a fourth port for introducing in said second interspace a further substance to be injected by means of the lance.

6. The injection lance according to one or more of the preceding claims, **characterized in that** around said third tubular body there is a tubular cladding body, a cooling interspace being formed between said tubular cladding body and said third tubular body and being connected to an inlet port and to an outlet port for a cooling fluid.

7. The injection lance according to one or more of the preceding claims, **characterized in that** in said cooling interspace there is a substantially cylindrical partition which divides said cooling interspace into two chambers: an internal chamber, which is connected to said inlet port for the cooling fluid, and an outer chamber, which is connected to said outlet port for the cooling fluid, said two chambers being mutually connected proximate to the delivery end of the lance.
